(19) Europäisches Patentamt
European Patent Office
Office européen des brevets

(11) **EP 4 456 246 A1**

(12) **EUROPEAN PATENT APPLICATION**
published in accordance with Art. 153(4) EPC

(43) Date of publication:
**30.10.2024 Bulletin 2024/44**

(51) International Patent Classification (IPC):
*H01M 10/058* (2010.01)      *H01M 50/483* (2021.01)
*H01M 50/446* (2021.01)      *H01M 50/491* (2021.01)
*H01M 10/42* (2006.01)      *H01M 10/052* (2010.01)

(21) Application number: **23865878.5**

(22) Date of filing: **15.09.2023**

(52) Cooperative Patent Classification (CPC):
**H01M 10/052; H01M 10/058; H01M 10/42;
H01M 50/446; H01M 50/483; H01M 50/491**

(86) International application number:
**PCT/KR2023/013859**

(87) International publication number:
**WO 2024/058582 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022 KR 20220116598
25.08.2023 KR 20230111987**

(71) Applicant: **LG Chem, Ltd.**
**Yeongdeungpo-gu
Seoul 07336 (KR)**

(72) Inventors:
• **KIM, Su Jun**
**Daejeon 34122 (KR)**
• **PARK, Jeongsoo**
**Daejeon 34122 (KR)**
• **JIN, Sun Mi**
**Daejeon 34122 (KR)**
• **LEE, Hana**
**Daejeon 34122 (KR)**
• **YU, Ingyoung**
**Daejeon 34122 (KR)**

(74) Representative: **Hoffmann Eitle
Patent- und Rechtsanwälte PartmbB
Arabellastraße 30
81925 München (DE)**

(54) **ELECTRODE FOR LITHIUM SECONDARY BATTERY, AND LITHIUM SECONDARY BATTERY**

(57) An electrode for a lithium rechargeable battery includes an electrode substrate and a porous layer formed on the electrode substrate. The porous layer includes a binder resin and inorganic fine particles. The inorganic fine particles include boehmite and barium sulfate. A lithium rechargeable battery comprising the electrode is also provided.

**EP 4 456 246 A1**

Processed by Luminess, 75001 PARIS (FR)

**Description**

CROSS-REFERENCE TO RELATED APPLICATION(S)

This application is a national phase entry under 35 U.S.C. § 371 of International Application No. PCT/KR2023/013859 filed on September 15, 2023, which claims priority to Korean Patent Application No. 10-2022-0116598, filed on September 15, 2022, and Korean Patent Application No. 10-2023-0111987, filed on August 25, 2023, the disclosures of which are incorporated herein by reference in their entirety.

TECHNICAL FIELD

The present disclosure relates to a lithium rechargeable battery with excellent long-life battery life that includes a porous layer formed on an electrode substrate.

**BACKGROUND ART**

As the technology development and the demand for mobile devices have increased, the demand for a rechargeable battery that can be charged/discharged as an energy source has rapidly increased, and various research into rechargeable batteries capable of meeting various needs has been carried out accordingly. Also, a rechargeable battery can be charged/discharged has attracted considerable attention as a power source for an electric vehicle (EV), a hybrid electric vehicle (HEV), a plug-in hybrid electric vehicle (Plug-in HEV) and the like, which have been developed to solve air pollution and the like, caused by existing gasoline and diesel vehicles using fossil fuel.

Lithium rechargeable batteries explode with intense heat generation if a short circuit occurs due to contact between the cathode and the anode. A porous separator was used for this purpose, but due to material characteristics and manufacturing process characteristics including stretching, the porous separator for rechargeable batteries exhibits extreme thermal shrinkage behavior at temperatures of about 100°C or higher, which causes the problem that a short circuit occurs between the cathode and the anode.

Therefore, there is a need to research lithium rechargeable batteries containing a separator that can achieve stability and long battery life characteristics at high temperatures.

**[Technical Problem]**

It is an object of the present disclosure to provide an electrode for a lithium rechargeable battery that has improved life characteristics while having high insulation characteristic and low resistance characteristic.

It is another object of the present disclosure to provide a lithium rechargeable battery comprising the electrode for a lithium rechargeable battery.

**[Technical Solution]**

According to one aspect of the present disclosure, there is provided an electrode for a lithium rechargeable battery comprising: an electrode substrate; and a porous layer formed on the electrode substrate and including a binder resin and inorganic fine particles, wherein the inorganic fine particles include boehmite and barium sulfate.

According to another aspect of the present disclosure, there is provided a lithium rechargeable battery comprising the electrode for a lithium rechargeable battery.

**[Advantageous Effects]**

According to the present disclosure, a lithium rechargeable battery that has improved life characteristics while having high insulation characteristic and low resistance characteristic can be provided.

**DETAILED DESCRIPTION**

Now, an electrode for a lithium rechargeable battery and a lithium rechargeable battery according to embodiments of the present disclosure will be described in more detail.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own invention in the best way.

Unless defined otherwise, all technical and scientific terms used herein have the same meaning as commonly understood by one of ordinary skill in the art to which this disclosure belongs. The terms used herein are for the purpose of describing specific embodiments only and is not intended to limit the scope of the disclosure.

The singular forms "a," "an," and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present disclosure can be modified in various ways and take on various alternative forms, specific embodiments thereof are illustrated and described in detail below. However, it should be understood that there is no intent to limit the present disclosure to the particular forms disclosed, but on the contrary, the present disclosure covers all modifications, equivalents, and alternatives falling within the spirit and scope of the present disclosure.

In describing a position relationship, for example, when the position relationship is described as 'upon~', 'above~', 'below~', and 'next to~', one or more portions may be arranged between two other portions unless 'just' or 'direct' is used.

In describing a time relationship, for example, when the temporal order is described as 'after~', 'subsequent~', 'next~', and 'before~', a case which is not continuous may be included unless 'just' or 'direct' is used.

As used herein, the term 'at least one' should be understood to include any and all combinations of one or more of the associated listed items.

According to one embodiment of the present invention, there is provided an electrode for a lithium rechargeable battery comprising: an electrode substrate; and a porous layer formed on the electrode substrate and including a binder resin and inorganic fine particles, wherein the inorganic fine particles include boehmite and barium sulfate.

The present inventors have developed an electrode for a lithium rechargeable battery in which a porous layer containing the binder particles and inorganic fine particles as mentioned above is located on an electrode substrate, and confirmed through experiments that as the lithium rechargeable battery includes a porous layer containing the binder particles and inorganic fine particles, it not only can prevent the structural stability from decreasing or the battery performance from decreasing even at high temperatures of 100°C or more, but also can have improved life characteristics while having high insulation characteristics and low resistance characteristics, thereby completing the present invention.

In particular, the porous layer included in the electrode for a lithium rechargeable battery can replace the function of the existing polymer separator, but as the porous layer contains barium sulfate, gas generation and battery swelling within the lithium rechargeable battery can be minimized due to low reactivity between the electrolytes, it can prevent a phenomenon in which the porous layer is deformed in the shape or deteriorated in physical properties due to thermal shrinkage or the like even at temperatures of about 100°C or more, and at the same time, as the porous layer includes boehmite, which has a lower density than other inorganic particles, it can increase the energy density per weight while having excellent heat resistance properties.

Specifically, the porous layer may include a binder resin and inorganic fine particles.

By adjusting the type of inorganic fine particles, the size of inorganic fine particles, the content of inorganic fine particles, and the content of binder resin, the porous layer can form pores in a micro unit, and can adjust the pore size and porosity. That is, as the second porous layer includes the binder resin and the inorganic fine particles, the porosity of the porous layer can satisfy 30% or more and 90% or less.

The inorganic fine particles are a main component forming the porous layer, and empty spaces exist between the inorganic fine particles, which not only serve to form fine pores, but also serve as a kind of spacer capable of maintaining the physical shape of the porous layer.

The inorganic fine particles are not limited as long as they are electrochemically stable, and do not undergo an oxidation and/or reduction reaction within the operating voltage range of the applied battery. In particular, when inorganic fine particles having ion transfer ability are used, the ion conductivity in the lithium rechargeable battery can be increased and the performance can be improved. In addition, when inorganic particles having a high dielectric constant are used as the inorganic fine particles, it contributes to increasing the degree of dissociation of an electrolyte salt, such as a lithium salt, in the liquid electrolyte, which can improve the ionic conductivity of the electrolyte.

Specifically, the inorganic fine particles may include boehmite and barium sulfate.

Barium sulfate has low moisture content and low reactivity with lithium salts in the electrolyte, and thus has stable properties in the electrolyte. In addition, barium sulfate may cause water decomposition when water is bonded to the surface, or has a strong binding force with water, whereby it suppresses side reactions that proceeds due to reaction with electrolyte and water, and can realize the effect of not only generating less gas but also increasing the long-term life characteristics of the battery. Accordingly, gas generation and battery swelling in the lithium rechargeable battery containing barium sulfate are minimized, and excellent battery life characteristics can be realized and a stable effect in the battery can be realized.

Further, since boehmite has a lower density compared to other inorganic particles, an electrode for a lithium rechargeable battery comprising a porous layer containing boehmite along with barium sulfate has excellent heat resistance characteristics and also can increase energy density per weight.

That is, as the porous layer of the electrode for a lithium rechargeable battery of the above embodiment simultaneously contains barium sulfate and boehmite as inorganic fine particles, it is possible to achieve excellent heat resistance properties and high energy density per weight, and at the same time, realize excellent battery life characteristics and stable effects within the battery.

Specifically, the inorganic fine particles may include boehmite and barium sulfate in a weight ratio of 9:1 to 6:4. More specifically, the inorganic fine particles may include boehmite and barium sulfate in a weight ratio of 9:1 to 6:4, 9:1 to 7.5:2.5, or 9:1 to 7:3.

As the porous layer of the electrode for a lithium rechargeable battery according to the one embodiment includes boehmite and barium sulfate as inorganic fine particles in a weight ratio of 9:1 to 6:4, it can realize high energy density per weight while having excellent heat resistance properties, and at the same time, can realize excellent battery life characteristics and stable effects within the battery.

If boehmite is included in an excessive amount beyond the above weight ratio, side reactions may proceed due to reaction with the electrolyte and moisture, which may deteriorate the long-term life characteristics of the battery. If barium sulfate is included in an excessive amount outside the above weight ratio, the weight of the coating layer increases as the density of barium sulfate is higher, so that the battery efficiency is lowed, the packing density may become too high, and the resistance properties may deteriorate.

The barium sulfate may have, specifically, a green density of 2 $g/cm^3$ or more and 3 $g/cm^3$ or less, and a BET specific surface area of 5 $m^2/g$ or more and 50 $m^2/g$ or less.

As used herein, the term 'green density' refers to the density ($g/cm^3$) of a green pellet produced by filling a mold with a prescribed amount of inorganic particles and applying pressure.

The density of the green pellet of barium sulfate is the density of a green pellet produced by filling a mold with a prescribed amount of barium sulfate and applying pressure, and may vary depending on the particle material, particle shape, particle size, or particle porosity.

The barium sulfate may have a green density of 2 $g/cm^3$ or more and 3 $g/cm^3$ or less, which is measured under a pressure of 1 $ton/cm^2$.

As an example, when 1 g of barium sulfate is filled into a cylindrical mold with a diameter of 16 mm and a pressure of 1 $ton/cm^2$ is applied to produce a green pellet, barium sulfate that satisfies the density range of the green pellet can be preferably applied.

More specifically, the barium sulfate may have a green density of 2 $g/cm^3$ or more, 2.2 $g/cm^3$ or more, 2.3 $g/cm^3$ or more, 3 $g/cm^3$ or less, 2.5 $g/cm^3$ or less, 2.4 $g/cm^3$ or less, and 2 $g/cm^3$ or more and 3 $g/cm^3$ or less, 2.2 $g/cm^3$ or more and 3 $g/cm^3$ or less, 2.3 $g/cm^3$ or more and 3 $g/cm^3$ or less, 2 $g/cm^3$ or more and 2.5 $g/cm^3$ or less, 2.2 $g/cm^3$ or more and 2.5 $g/cm^3$ or less, 2.3 $g/cm^3$ or more and 2.5 $g/cm^3$ or less, 2 $g/cm^3$ or more and 2.4 $g/cm^3$ or less, 2.2 $g/cm^3$ or more and 2.4 $g/cm^3$ or less, 2.3 $g/cm^3$ or more and 2.4 $g/cm^3$ or less.

Further, the barium sulfate may have a BET specific surface area of 5 $m^2/g$ or more, 10 $m^2/g$ or more, 20 $m^2/g$ or more, 30 $m^2/g$ or more, 50 $m^2/g$ or less, 40 $m^2/g$ or less, 35 $m^2/g$ or less, 5 $m^2/g$ or more and 50 $m^2/g$ or less, 10 $m^2/g$ or more and 50 $m^2/g$ or less, 20 $m^2/g$ or more and 50 $m^2/g$ or less, 30 $m^2/g$ or more and 50 $m^2/g$ or less, 5 $m^2/g$ or more and 40 $m^2/g$ or less, 10 $m^2/g$ or more and 40 $m^2/g$ or less, 20 $m^2/g$ or more and 40 $m^2/g$ or less, 30 $m^2/g$ or more and 40 $m^2/g$ or less, 5 $m^2/g$ or more and 35 $m^2/g$ or less, 10 $m^2/g$ or more and 35 $m^2/g$ or less, 20 $m^2/g$ or more and 35 $m^2/g$ or less, 30 $m^2/g$ or more and 35 $m^2/g$ or less.

As the barium sulfate has a green density of 2 $g/cm^3$ or more and 3 $g/cm^3$ or less and a BET specific surface area of 5 $m^2/g$ or more and 50 $m^2/g$ or less, it is possible to realize a dense pore structure and a high pore tortuosity in the porous layer.

If the density of the green pellet of barium sulfate is outside the above range, a dense pore structure is not formed in the porous layer, so that not only an uneven potential is formed in the electrode for a lithium rechargeable battery, but also an appropriate level of curvature is not provided, so that the possibility of defects occurring in the porous layer increases and the resistance may increase.

Further, if the BET specific surface area of barium sulfate is outside the above range, a dense pore structure may not be formed in the porous layer, and an appropriate level of tortuosity may not be imparted.

The boehmite may have a green density of 1 $g/cm^3$ or more and 1.8 $g/cm^3$ or less, and a BET specific surface area of 5 $m^2/g$ or more and 120 $m^2/g$ or less.

As used herein, the term 'green density' refers to the density ($g/cm^3$) of a green pellet produced by filling a mold with a prescribed amount of inorganic particles and applying pressure.

The green density of boehmite is the density of a green pellet produced by filling a mold with a prescribed amount of boehmite and applying pressure, and may vary depending on the particle material, particle shape, particle size, or particle porosity,

The boehmite may have a green density of 1 $g/cm^3$ or more and 1.8 $g/cm^3$ or less, which is measured under a pressure of 1 $ton/cm^2$.

As an example, when a green pellet was produced by filling a cylindrical mold with a diameter of 16 mm with 1 g of boehmite and applying a pressure of 1 ton/cm$^2$, the boehmite satisfying the green density range can be preferably applied.

More specifically, the boehmite may have a green density of 1 g/cm$^3$ or more, 1.2 g/cm$^3$ or more, 1.3 g/cm$^3$ or more, 1.8 g/cm$^3$ or less, 1.5 g/cm$^3$ or less, 1.4 g/cm$^3$ or less, and 1 g/cm$^3$ or more and 1.8 g/cm$^3$ or less, 1.2 g/cm$^3$ or more and 1.8 g/cm$^3$ or less, 1.3 g/cm$^3$ or more and 1.8 g/cm$^3$ or less, 1 g/cm$^3$ or more and 1.5 g/cm$^3$ or less, 1.2 g/cm$^3$ or more and 1.5 g/cm$^3$ or less, 1.3 g/cm$^3$ or more and 1.5 g/cm$^3$ or less, 1 g/cm$^3$ or more and 1.4 g/cm$^3$ or less, 1.2 g/cm$^3$ or more and 1.4 g/cm$^3$ or less, 1.3 g/cm$^3$ or more and 1.4 g/cm$^3$ or less.

Further, the boehmite may have a BET specific surface area of 5 m$^2$/g or more, 10 m$^2$/g or more, 20 m$^2$/g or more, 50 m$^2$/g or more, 60 m$^2$/g or more, 80 m$^2$/g or more, 90 m$^2$/g or more, 120 m$^2$/g or less, 100 m$^2$/g or less, or 5 m$^2$/g or more and 120 m$^2$/g or less, 10 m$^2$/g or more and 120 m$^2$/g or less, 20 m$^2$/g or more and 120 m$^2$/g or less, 50 m$^2$/g or more and 120 m$^2$/g or less, 60 m$^2$/g or more and 120 m$^2$/g or less, 80 m$^2$/g or more and 120 m$^2$/g or less, 90 m$^2$/g or more and 120 m$^2$/g or less, 5 m$^2$/g or more and 100 m$^2$/g or less, 10 m$^2$/g or more and 100 m$^2$/g or less, 20 m$^2$/g or more and 100 m$^2$/g or less, 50 m$^2$/g or more and 100 m$^2$/g or less, 60 m$^2$/g or more and 100 m$^2$/g or less, 80 m$^2$/g or more and 100 m$^2$/g or less, 90 m$^2$/g or more and 100 m$^2$/g or less.

As the boehmite has a green density of 1 g/cm$^3$ or more and 1.8 g/cm$^3$ or less, and a BET specific surface area of 5 m$^2$/g or more and 120 m$^2$/g or less, it is possible to realize a dense pore structure and a high pore tortuosity in the porous layer.

If the green density of the boehmite is outside the above range, not only a dense pore structure is not formed in the porous layer and thus, an uneven potential is formed in the electrode for ae lithium rechargeable battery, but an appropriate level of tortuosity is not provided and thus, the possibility of defects occurring in the porous layer increases and the resistance may increase.

Further, if the BET specific surface area of the boehmite is outside the above range, a dense pore structure may not be formed in the porous layer, and an appropriate level of tortuosity may not be imparted.

In the electrode for a lithium rechargeable battery according to one embodiment, the porous layer may have a porosity of 30% or more and 90% or less.

Specifically, in the electrode for a lithium rechargeable battery according to one embodiment, the porous layer may have a porosity of 30 % or more, 35 %or more, 90 % or less, 80% or less, 70% or less, 60 % or less, 57 % or less, 30 % or more and 90 % or less, 30 % or more and 80% or less, 30 % or more and 70% or less, 30 % or more and 60 % or less, 30 % or more and 57 % or less, 35 % or more and 90 % or less, 35 % or more and 80% or less, 35 % or more and 70% or less, 35 % or more and 60 % or less, 35 % or more and 57 % or less.

The porosity of the porous layer can be realized depending on the composition of the porous layer. Specifically, the porosity of the porous layer can be realized by adjusting the type of inorganic fine particles, the size of inorganic fine particles, the content of inorganic fine particles, and the content of binder resin. As the porosity of the porous layer is 30% or more and 90% or less, a movement passage of lithium ions in the electrolyte filled in the pores is secured, and the resistance as low as possible is imparted, thereby realizing high ionic conductivity.

If the porosity of the porous layer exceeds 90%, the function of securing the physical and electrochemical insulation properties of the porous layer may deteriorate, which may lead to internal short circuits and reduced safety of the battery. If the porosity of the porous layer is less than 30%, the movement path of porous lithium ions is reduced, which may lead to an increase in cell resistance and thus decrease battery capacity during rapid charging and discharging.

The porosity can be measured using the thickness, weight, and density of the porous layer components using a thickness measuring device and scale under vacuum drying conditions for an electrode substrate sample on which a porous layer of unit area is formed.

Specifically, the porosity can be determined by measuring the volume and mass of the porous layer for a sample coated with the composition on an electrode substrate of a certain area, and calculating the ratio of the obtained density and the theoretical density of the solid content of the coating composition according to the following Equation 1.

[Equation 1]

$$\text{Porosity (\%)} = \{1 - (\text{Actual density})/(\text{Theoretical density})\} \times 100.$$

As mentioned above, the porosity of the porous layer can be realized by adjusting the type of inorganic fine particles, the size of inorganic fine particles, the content of inorganic fine particles, and the content of the binder resin.

Specifically, the boehmite and barium sulfate may each include primary particles having a diameter of 5 nm or more and 90 nm or less. The diameter of the inorganic fine particles may refer to the longest diameter of the inorganic fine particles, which is confirmed through a scanning electron microscope image (SEM) or a transmission electron microscope image (TEM) taken of the cross section of the porous layer.

Specifically, the inorganic fine particles may have a diameter, that is, a primary particle (single particle) diameter of 5 nm or more, 10 nm or more, 20 nm or more, 40 nm or more, 90 nm or less, 80 nm or less, 70 nm or less, 5 nm or more and 90 nm or less, 10 nm or more and 90 nm or less, 20 nm or more and 90 nm or less, 40 nm or more and 90 nm or less, 5 nm or more and 80 nm or less, 10 nm or more and 80 nm or less, 20 nm or more and 80 nm or less, 40 nm or more and 80 nm or less, 5 nm or more and 70 nm or less, 10 nm or more and 70 nm or less, 20 nm or more and 70 nm or less, 40 nm or more and 70 nm or less.

When the diameter of the inorganic fine particles is less than 5 nm, the dispersibility decreases and it is not easy to adjust the physical properties of the porous layer. If the diameter of the inorganic fine particles exceeds 90 nm, the thickness of the porous layer may increase and the mechanical properties may deteriorate, and further, due to excessively large pore size, the probability of internal short circuiting during battery charging and discharging becomes higher.

That is, the electrode for a lithium rechargeable battery according to the above embodiment may include a porous layer which simultaneously contains nano-sized inorganic fine particles including boehmite and barium sulfate, each containing primary particles having a diameter of 5 nm or more and 90 nm or less, and a binder resin.

As the porous layer simultaneously includes nano-sized inorganic fine particles containing boehmite and barium sulfate, each containing primary particles having a diameter of 5 nm or more and 90 nm or less, and a binder resin, the binding force between particles and the interfacial peel strength are improved, thereby being able to simultaneously realize excellent mechanical properties (flexibility) and insulation properties of the coating layer.

Further, when the inorganic nanoparticles are included as nano-sized inorganic fine particles containing primary particles with a diameter of 5 nm or more and 90 nm or less, the process yield can be increased compared to the case of containing inorganic materials in the form of fibers, and as the coating density and thickness can be controlled, excellent ionic conductivity due to uniform pore formation can be achieved.

Further, the inorganic fine particles may have a D50 of 1 nm to 500 nm. The D50 may refer to the value of the particle diameter at 50% in the cumulative distribution of partis size diameters, in order from the smallest one on the basis of mass, among particle diameters measured by a laser diffraction scattering particle size distribution measuring apparatus.

Specifically, the inorganic fine particles have a D50 of 1 nm or more, 10 nm or more, 20 nm or more, 50 nm or more, 70 nm or more, 100 nm or more, 120 nm or more, 150 nm or more, 500 nm or less, 400 nm or less, 350 nm or less, and 1 nm or more and 500 nm or less, 10 nm or more and 500 nm or less, 20 nm or more and 500 nm or less, 50 nm or more and 500 nm or less, 70 nm or more and 500 nm or less, 100 nm or more and 500 nm or less, 120 nm or more and 500 nm or less, 150 nm or more and 500 nm or less, 1 nm or more and 400 nm or less, 10 nm or more and 400 nm or less, 20 nm or more and 400 nm or less, 50 nm or more and 400 nm or less, 70 nm or more and 400 nm or less, 100 nm or more and 400 nm or less, 120 nm or more and 400 nm or less, 150 nm or more and 400 nm or less, 1 nm or more and 350 nm or less, 10 nm or more and 350 nm or less, 20 nm or more and 350 nm or less, 50 nm or more and 350 nm or less, 70 nm or more and 350 nm or less, 100 nm or more and 350 nm or less, 120 nm or more and 350 nm or less, 150 nm or more and 350 nm or less.

If the D50 of the inorganic fine particles is less than 1 nm, the dispersibility decreases and it is not easy to adjust the physical properties of the porous layer, and if the D50 of the inorganic fine particles exceeds 500 nm, the thickness of the porous layer increases, which may reduce mechanical properties, and due to the excessively large pore size, the probability of internal short circuit occurring during battery charging and discharging becomes higher.

Further, the porous layer may include 110 to 5,000 parts by weight of the inorganic fine particles based on 100 parts by weight of the binder resin.

Specifically, the porous layer may include the inorganic fine particles in an amount of 110 parts by weight or more, 150 parts by weight or more, 5000 parts by weight or less, 3000 parts by weight or less, 1000 parts by weight or less, or 110 parts by weight or more and 5000 parts by weight or less, 110 parts by weight or more and 3000 parts by weight or less, 110 parts by weight or more and 1000 parts by weight or less, 150 parts by weight or more and 5000 parts by weight or less, 150 parts by weight or more and 3000 parts by weight or less, 150 parts by weight or more and 1000 parts by weight or less, based on 100 parts by weight of the binder resin.

By adjusting the size of the inorganic fine particles, the content of the inorganic fine particles, and the content of the binder resin, the porous layer can form pores in a micro unit, and can adjust the pore size and porosity. That is, as the porous layer contains 110 to 5000 parts by weight of the inorganic fine particles based 100 parts by weight of the binder resin, the porosity of the porous layer can satisfy 30% or more and 90% or less.

When the porous layer contains less than 110 parts by weight of the inorganic fine particles based on 100 parts by weight of the binder resin, the content of the binder resin is too high, and the pore diameter and porosity may decrease due to a decrease in the empty space formed between the inorganic fine particles, thereby deteriorating the final battery performance. Further, when the porous layer contains more than 5000 parts by weight of the inorganic fine particles based on 100 parts by weight of the binder resin, the content of the binder resin is too low, and the adhesive force between the inorganic fine particles may be weakened, thereby weakening the peeling resistance and deteriorating the mechanical properties of the porous layer.

Further, the porous layer may include barium sulfate in an amount of 50 to 500 parts by weight based on 100 parts by weight of the binder resin.

Specifically, the porous layer may include barium sulfate in an amount of 50 parts by weight or more, 75 parts by weight or more, 80 parts by weight or more, 90 parts by weight or more, 500 parts by weight or less, 400 parts by weight or less, 300 parts by weight or less, 270 parts by weight or less, 50 parts by weight or more 500 parts by weight or less, 75 parts by weight or more and 500 parts by weight or less, 80 parts by weight or more and 500 parts by weight or less, 90 parts by weight or more and 500 parts by weight or less, 50 parts by weight or more and 400 parts by weight or less, 75 parts by weight or more and 400 parts by weight or less, 80 parts by weight or more and 400 parts by weight or less, 90 parts by weight or more and 400 parts by weight or less, 50 parts by weight or more and 300 parts by weight or less, 75 parts by weight or more and 300 parts by weight or less, 80 parts by weight or more and 300 parts by weight or less, 90 parts by weight or more and 300 parts by weight or less, 50 parts by weight or more and 270 parts by weight or less, 75 parts by weight or more and 270 parts by weight or less, 80 parts by weight or more and 270 parts by weight or less, 90 parts by weight or more and 270 parts by weight or less, based on 100 parts by weight of the binder resin.

As the porous layer contains 50 to 500 parts by weight of barium sulfate based on 100 parts by weight of the binder resin, gas generation and battery swelling within the lithium rechargeable battery are minimized, excellent battery life characteristics can be realized, and a stable effect within the battery can be realized.

When the porous layer contains less than 50 parts by weight of barium sulfate compared to 100 parts by weight of the binder resin, the content of the binder resin becomes too high, and the pore size and porosity decrease due to the decrease in the voids formed between the inorganic fine particles, so that the final battery performance is reduced due to the decrease in voids formed between inorganic fine particles, resulting in a decrease in the final battery performance, but also the side reactions occurring due to reactions with the electrolyte and moisture may progress, so that the long-term life characteristics of the battery may become poor. When the porous layer contains more than 500 parts by weight of barium sulfate based on 100 parts by weight of the binder resin, the content of the binder resin is too small, and the peeling resistance is weakened due to weakened adhesive force between inorganic fine particles, thereby weakening the porous layer and deteriorating the mechanical properties.

Further, the porous layer may include 110 to 1000 parts by weight of boehmite based on 100 parts by weight of the binder resin.

Specifically, the porous layer may include the boehmite in an amount of 110 parts by weight or more, 200 parts by weight or more, 300 parts by weight or more, 400 parts by weight or more, 500 parts by weight or more, 600 parts by weight or more, 630 parts by weight or more, 1000 parts by weight or less, 900 parts by weight or less, 850 parts by weight or less, 810 parts by weight or less, or 110 parts by weight or more 1000 parts by weight or less, 200 parts by weight or more and 1000 parts by weight or less, 300 parts by weight or more and 1000 parts by weight or less, 400 parts by weight or more and 1000 parts by weight or less, 500 parts by weight or more and 1000 parts by weight or less, 600 parts by weight or more and 1000 parts by weight or less, 630 parts by weight or more and 1000 parts by weight or less, 110 parts by weight or more and 900 parts by weight or less, 200 parts by weight or more and 900 parts by weight or less, 300 parts by weight or more and 900 parts by weight or less, 400 parts by weight or more and 900 parts by weight or less, 500 parts by weight or more and 900 parts by weight or less, 600 parts by weight or more and 900 parts by weight or less, 630 parts by weight or more and 900 parts by weight or less, 110 parts by weight or more and 850 parts by weight or less, 200 parts by weight or more and 850 parts by weight or less, 300 parts by weight or more and 850 parts by weight or less, 400 parts by weight or more and 850 parts by weight or less, 500 parts by weight or more and 850 parts by weight or less, 600 parts by weight or more and 850 parts by weight or less, 630 parts by weight or more and 850 parts by weight or less, 110 parts by weight or more and 810 parts by weight or less, 200 parts by weight or more and 810 parts by weight or less, 300 parts by weight or more and 810 parts by weight or less, 400 parts by weight or more and 810 parts by weight or less, 500 parts by weight or more and 810 parts by weight or less, 600 parts by weight or more and 810 parts by weight or less, 630 parts by weight or more and 810 parts by weight or less, based on 100 parts by weight of the binder resin.

As the porous layer contains 110 to 1000 parts by weight of boehmite based on 100 parts by weight of the binder resin, it can increase energy density per weight while having excellent heat resistance properties.

When the porous layer contains less than 110 parts by weight of boehmite based on 100 parts by weight of the binder resin, the content of the binder resin becomes too high, the pore diameter and porosity may decrease due to the decrease in the empty space formed between the inorganic fine particles, which may deteriorate the final battery performance. When the porous layer contains more than 1000 parts by weight of boehmite based on 100 parts by weight of the binder resin, the content of the binder resin is too small, and the peeling resistance is weakened due to weakened adhesive force between inorganic fine particles, which may deteriorate the mechanical properties of the porous layer.

In one embodiment, the porous layer may include a binder resin. The binder resin functions to connect and fix the inorganic fine particles.

Specifically, the binder resin may include one or more binder resins selected from the group consisting of polyvinylidene fluoride, polyvinylidene fluoride-hexafluoropropylene, polyvinylidene fluoride-tetrafluoroethylene, polyvinylidene fluoride-trichlorethylene, polyvinylidene fluoride-chlorotrifluoroethylene, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, and styrene butadiene rubber.

In the above embodiment, the thickness of the porous layer is not particularly limited, and considering the shape and type of the lithium rechargeable battery, the porous layer may have a thickness of 0.1 $\mu$m or more and 100 $\mu$m or less.

Specifically, the thickness of the porous layer may be 0.1 $\mu$m or more, 1 $\mu$m or more, 10 $\mu$m or more, 100 $\mu$m or less, 50 $\mu$m or less, 30 $\mu$m or less, 20 $\mu$m or less, 0.1 $\mu$m or more and 100 $\mu$m or less, 0.1 $\mu$m or more and 50 $\mu$m or less, 0.1 $\mu$m or more and 30 $\mu$m or less, 0.1 $\mu$m or more and 20 $\mu$m or less, 1 $\mu$m or more and 100 $\mu$m or less, 1 $\mu$m or more and 50 $\mu$m or less, 1 $\mu$m or more and 30 $\mu$m or less, 1 $\mu$m or more and 20 $\mu$m or less, 10 $\mu$m or more and 100 $\mu$m or less, 10 $\mu$m or more and 50 $\mu$m or less, 10 $\mu$m or more and 30 $\mu$m or less, 10 $\mu$m or more and 20 $\mu$m or less.

If the thickness of the porous layer is too thin, a short circuit within the cell may occur due to a decrease in the insulation properties between electrodes. If the thickness of the porous layer is too thick, the cell properties may deteriorate due to an increase in overall cell resistance.

On the other hand, in the electrode for a lithium rechargeable battery according to the above embodiment, the porous layer may be bonded with the electrode substrate via an adhesive layer or adhesive pattern formed on at least one surface.

The adhesive layer or adhesive pattern may include commonly known adhesive components without limitation. Examples thereof include one or more polymer resins selected from the group consisting of polyvinylidene fluoride-hexafluoropropylene, polyvinylidene fluoride-trichlorethylene, polyvinylidene fluoride-tetrafluoroethylene, polyvinylidene fluoride-trifluoroethylene, and polyacrylic acid.

The thickness of the adhesive layer or adhesive pattern is not particularly limited, and may be adjusted to, for example, 0.01 $\mu$m to 100 $\mu$m in consideration of the battery performance.

If the thickness of the adhesive layer or adhesive pattern is less than 0.01 $\mu$m, not only the adhesive force with the anode substrate and/or the cathode substrate decreases, but also a short circuit inside the cell may occur due to a decrease in the insulation properties between electrodes. If the thickness exceeds 100 $\mu$m, cell properties may deteriorate as the overall cell resistance increases.

Further, in the case of the adhesive pattern, it may have a cross-sectional area of 0.01 $\mu$m$^2$ to 100 $\mu$m$^2$, two or more may be formed on one surface of the porous layer, and may be located at a predetermined position on one surface of the porous layer, taking into consideration the bonding force with the electrode substrate or the structural safety of the lithium rechargeable battery.

According to another embodiment of the invention, there can be provided a lithium rechargeable battery comprising: the electrode for a lithium rechargeable battery according to the one embodiment; a counter electrode of the electrode for a lithium rechargeable battery; and an electrolyte interposed between the electrode for a lithium rechargeable battery and the counter electrode.

Specifically, the lithium rechargeable battery according to the one embodiment may include an electrode assembly wound with a separator between a cathode and an anode, and a case that incorporates the electrode assembly. In addition, the cathode, the anode, and the separator can be impregnated with an electrolyte.

When the above-mentioned electrode for a lithium rechargeable battery is an anode, the counter electrode of the electrode for a lithium rechargeable battery may be a cathode, and when he above-mentioned electrode for a lithium rechargeable battery is a cathode, the counter electrode of the electrode for a lithium rechargeable battery may be an anode.

When the above-mentioned electrode for a lithium rechargeable battery is an anode, the electrode for a lithium rechargeable battery may include an anode substrate.

The anode substrate may include an anode material including an anode active material, a conductive material and a binder; and a current collector supporting the anode material.

The anode active material may include a material capable of reversibly intercalating and de-intercalating lithium ions, a lithium metal, a lithium metal alloy, a material capable of doping and de-doping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and de-doping lithium may include Si, a Si-C composite, SiO$_x$ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, $SnO_2$, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and de-doping lithium, at least one of the above examples can also be mixed with $SiO_2$ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may be vanadium oxide, lithium vanadium oxide, lithium titanium oxide, and the like.

The anode current collector is generally fabricated to have a thickness of 3 to 500 $\mu$m. Such an anode current collector is not particularly limited as long as it has high conductivity without causing chemical changes to the corresponding battery. For example, copper, stainless steel, aluminum, nickel, titanium, calcined carbon, copper or stainless steel having a surface treated with carbon, nickel, titanium, silver, etc., aluminum-cadmium alloy, and the like may be used. In addition, similarly to the cathode current collector, the anode current collector may be processed to form fine irregularities on the surface thereof so as to enhance adhesion to the anode active material, and the current collector can be used in various forms such as a film, a sheet, a foil, a net, a porous body, a foaming body, and a non-woven fabric structure.

The anode substrate may include an anode active material including at least one selected from the group consisting of a carbonaceous material and a silicon compound.

Here, the carbonaceous material is a material containing at least one selected from the group consisting of natural graphite, artificial graphite, Kish graphite, pyrolytic carbon, mesophase pitches, mesophase pitch based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOx (wherein 0<x<2), the Si-Q alloy, mixtures thereof, or a mixture of at least one thereof and $SiO_2$.

Further, the anode substrate may include micro silicon. When the anode substrate includes micro silicon, it is possible to realize a superior capacity compared to the case where a carbonaceous material is used as an anode active material. Specifically, when a specific micro silicon is used as the silicon compound, it is possible to maintain a remaining capacity of 80% or more even after charging and discharging 500 times or more, and realize significantly superior energy density to conventional lithium rechargeable batteries. Further, when the anode includes micro silicon, the charge/discharge life of a solid battery using a solid electrolyte can be greatly increased, and the charging speed at room temperature can also be greatly improved.

Although the size of the micro silicon is not particularly limited, but for example, the micro silicon may have a diameter of 100 $\mu$m or less, or a diameter of 1 to 100 $\mu$m, or a diameter of 1 to 20 $\mu$m.

The anode active material may be contained in an amount of 85% to 98% by weight relative to the total weight of the anode material.

Specifically, the content of the anode active material may be 85% by weight or more, or 87% by weight or more, or 90% by weight or more; and 98% by weight or less, or 97% by weight or less, or 96% by weight or less relative to the total weight of the anode material.

The content of the anode active material may be 85% by weight to 98% by weight, 87% by weight to 98% by weight, 90% by weight to 98% by weight, 85% by weight to 97% by weight, 87% by weight to 97% by weight, 90% by weight to 97% by weight, 85% by weight to 96% by weight, 87% by weight to 96% by weight, 90% by weight to 96% by weight relative to the total weight of the anode material.

The conductive material is used to impart conductivity to the electrode.

The conductive material can be used without particular limitation as long as it has electronic conductivity without causing chemical changes in the battery. As a non-limiting example, the conductive material may include carbon-based materials such as carbon black, acetylene black, KETJEN black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 0.5% to 10% by weight, or 1% to 10% by weight, or 1% to 5% by weight with respect to the total weight of the anode material.

The binder is used to properly attach the anode material to the current collector.

As a non-limiting example, the binder may include polyvinylidenefluoride (PVdF), a polyvinylidenefluoride-hexafluoropropylene copolymer(PVdF-co-HFP), polyvinyl alcohol, polyacrylonitrile, carboxymethylcellulose(CMC), starch, hydroxypropylcellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber (SBR), fluorine rubber, and the like. As the binder, any one alone or a mixture of two or more of the above-mentioned examples may be used.

The content of the binder may be adjusted within a range that does not cause a decrease in battery capacity while exhibiting an appropriate level of adhesiveness. Preferably, the content of the binder may be 0.5% to 10% by weight, 1% to 10% by weight, or 1% to 5% by weight with respect to the total weight of the anode material.

When the above-mentioned electrode for a lithium rechargeable battery is a cathode, the electrode for a lithium rechargeable battery may include a cathode substrate.

The cathode substrate may include a cathode active material, a binder, a conductive material, and a cathode additive.

The cathode additive has a property of irreversibly releasing lithium during charging and discharging of the lithium rechargeable battery. Therefore, the cathode additive may be included in a cathode for a lithium rechargeable battery and serve as a sacrificial cathode material for prelithiation.

Specifically, the cathode substrate can be manufactured by coating a cathode mixture onto a cathode current collector and then drying it, and if necessary, a filler can be further added to the mixture.

The cathode substrate comprises a cathode material including a cathode active material, a conductive material, the sacrificial cathode material, and a binder; and, a current collector supporting the cathode material.

As it goes toward higher capacity batteries, the ratio of the anode active material in the anode must be higher in order to increase the capacity of the battery, which also increases the amount of lithium consumed in the SEI layer. Therefore, the design capacity of the battery can be determined by calculating the amount of lithium consumed in the SEI layer of the anode and then back-calculating the amount of the sacrificial cathode material to be applied to the cathode.

The sacrificial cathode material may be contained in an amount of more than 0% by weight and less than 15% by weight relative to the total weight of the cathode material.

The content of the sacrificial cathode material is preferably more than 0% by weight relative to the total weight of the cathode material.

However, when the sacrificial cathode material is excessively contained, the content of the cathode active material showing reversible charge/discharge capacity decreases, and the capacity of the battery decreases, and the residual lithium in the battery is plated on the anode, causing a short circuit of the battery or impairing safety. Therefore, the content of the sacrificial cathode material is preferably 15% by weight or less relative to the total weight of the cathode material.

Specifically, the content of the sacrificial cathode material may be more than 0% by weight, or more than 0.5% by weight, or 1% by weight or more, or 2% by weight or more, or 3% by weight or more; and 15% by weight or less, or 12% by weight or less, or 10% by weight or less based on the total weight of the cathode material.

The content of the sacrificial cathode material may be 0.5% by weight to 15% by weight, or 1% by weight to 15% by weight, or 1% by weight to 12% by weight, or 2% by weight to 12% by weight, or 2% by weight to 10% by weight, or 3% by weight to 10% by weight based on the total weight of the cathode material.

Examples of the cathode active material are not particularly limited, but for example, $NCM(Li[Ni,Co,Mn]O_2)$, $NCMA(Li[Ni,Co,Mn,Al]O_2)$, $LiCoO_2$, $LiNiO_2$, $LiMnO_2$, $LiMn_2O_4$, $LiNi_{1-d}Co_dO_2$, $LiCo_{1-d}Mn_dO_2$, $LiNi_{1-d}Mn_dO_2$ (wherein $0 \leq d < 1$), $Li(Ni_aCo_bMn_c)O_4$ ($0<a<2$, $0<b<2$, $0<c<2$, $a+b+c=2$), $LiMn_{2-e}Ni_eO_4$, $LiMn_{2-e}Co_eO_4$ (wherein $0 < e < 2$), $LiCoPO_4$, $LiFePO_4$, or mixtures of two or more thereof can be used.

The cathode active material may be contained in an amount of 80% to 98% by weight based on the total weight of the cathode material. Specifically, the content of the cathode active material may be 80% or more, or 85% or more, or 90% or more, or 95% or more; and 98% by weight or less based on the total weight of the cathode material.

The content of the cathode active material may be 80% by weight or more and 98% by weight or less, or 85% by weight or more and 98% by weight or less, or 90% by weight or more and 98% by weight or less based on the total weight of the cathode material.

The cathode substrate can be formed by stacking a cathode material including the cathode active material, the conductive material, the sacrificial cathode material, and a binder on the current collector.

The filler is selectively used as a component that suppresses expansion of the cathode, and is not particularly limited as long as it is a fibrous material without causing chemical change in the battery. For example, olefinic polymers such as polyethylene and polypropylene; and fibrous materials such as glass fibers and carbon fibers are used.

The details concerning the conductive material, the binder, and the current collector included in the cathode material include all of the contents described above.

As mentioned above, the porous layer included in the lithium rechargeable battery may replace the function of an existing polymer separator, so that the lithium rechargeable battery may not include a porous polymer separator.

Meanwhile, optionally, the lithium rechargeable battery may further include a porous polymer substrate along with the porous layer.

The type of the porous polymer substrate is not particularly limited, but for example, a polymer substrate formed from one or more polymers selected from the group consisting of polyethylene, polypropylene, polyethyleneterephthalate, polybutyleneterephthalate, polyester, polyacetal, polyamide, polycarbonate, polyimide, polyetheretherketone, polyaryryletherketone, polyetherimide, polyamideimide, polybenzimidazole, polyethersulfone, polyphenyleneoxide, cyclic olefin copolymer, polyphenylenesulfide, and polyethylenenaphthalene, or a mixture of two or more thereof, or a multilayer film, woven fabric, or non-woven fabric thereof, can be used.

The porous polymer substrate can adjust the type and thickness of the substrate, the diameter and number of pores, and especially the thickness of ultrafine threads in the case of non-woven fabrics, taking into consideration the melting temperature, manufacturing convenience, porosity, ion movement, insulation properties, or the like.

The thickness of the porous polymer substrate is not particularly limited and may be adjusted to, for example, 0.01 to 100 μm in consideration of the battery performance.

Meanwhile, the electrolyte can be used without particular limitation as long as it is known to be applicable to lithium rechargeable batteries in the technical field to which the present disclosure pertains. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, an aqueous electrolyte, or the like.

The aqueous electrolyte is the one obtained by dissolving a salt in an aqueous solvent such as water or alcohol, and a lithium rechargeable battery using such an aqueous electrolyte offers advantages in terms of high ionic conductivity and safety of the aqueous electrolyte, and inexpensive in process and manufacturing cost. In addition, a battery using an aqueous electrolyte rather than a non-aqueous organic electrolyte has an advantage in terms of environment.

Specifically, the aqueous electrolyte may include an aqueous solvent and a lithium salt.

The aqueous solvent is a solvent containing water, and is not particularly limited, but may contain 1% by weight or more of water relative to the total weight of the aqueous solvent that constitutes the electrolyte. As the aqueous solvent, water may be used alone, or a solvent miscible with water may be used in combination.

The water-miscible solvent may be a polar solvent, and can include, for example, at least one selected from the group consisting of a C1-C5 alcohol and a C1-C10 glycol ether.

For example, the C1 to C5 alcohol may be at least one selected from the group consisting of methanol, ethanol, n-propanol, isopropanol, ethylene glycol, 1,2-propanediol, 1,3-propanediol, 1,2-butanediol, 1,3-butanediol, 1,4-butanediol, glycerol and 1,2,4-butanetriol, but is not limited thereto.

Further, the C1-C10 glycol ether may be at least one selected from the group consisting of ethylene glycol monomethyl ether(MG), diethylene glycol monomethyl ether (MDG), triethylene glycol monomethyl ether(MTG), polyethylene glycol monomethyl ether(MPG), ethylene glycol monoethyl ether(EG), diethylene glycol monoethyl ether(EDG), ethylene glycol monobutyl ether(BG), diethylene glycol monobutyl ether(BDG), triethylene glycol monobutyl ether(BTG), propylene glycol monomethyl ether(MFG), and dipropylene glycol monomethyl ether(MFDG), but is not limited thereto.

The lithium salt contained in the electrolyte dissolves in the aqueous solvent and acts as a source of lithium ions in the battery, which enables basic operation of the lithium rechargeable battery and facilitates the movement of lithium ions between the cathode and the anode.

Specifically, the lithium salt includes $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), LiCl, Lil, $LiB(C_2O4)_2$, and the like. Preferably, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Alternatively, the electrolyte can comprise a non-aqueous organic solvent and a lithium salt.

The non-aqueous organic solvent can be used without any particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial cathode material, the non-aqueous organic solvent may be preferably a mixture of a cyclic carbonate having high ion conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium rechargeable battery and facilitates movement of lithium ions between the cathode and the anode.

The lithium salt may include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiN(SO_2F)_2$ (LiFSI, lithium bis(fluorosulfonyl)imide), LiCl, LiI, $LiB(C_2O_4)_2$, and the like. Specifically, the lithium salt may be $LiPF_6$, LiFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% to 5% by weight with respect to the total weight of the electrolyte.

The lithium rechargeable battery of one embodiment may be a lithium ion battery, a lithium ion polymer battery, or a lithium polymer battery, depending on the type of electrolyte and/or the type of separator.

The liquid electrolyte may be a lithium salt-containing non-aqueous electrolyte. The lithium salt-containing non-aqueous electrolyte is composed of a non-aqueous electrolyte and lithium, and the non-aqueous electrolyte includes a non-aqueous organic solvent, an organic solid electrolyte, an inorganic solid electrolyte, and the like, but are not limited thereto.

The organic solid electrolyte may include polyethylene derivatives, polyethylene oxide derivatives, polypropylene oxide derivatives, phosphoric acid ester polymers, polyagitation lysine, polyester sulfide, polyvinyl alcohols, polyvinylidene fluoride, and polymers containing ionic dissociation groups.

As the inorganic solid electrolyte, nitrides, halides and sulfates of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$ may be used.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further contain halogen-containing solvents such as carbon tetrachloride and ethylene trifluoride. Further, in order to improve high-temperature storage characteristics, the non-aqueous electrolyte may further contain carbon dioxide gas or the like and may further contain fluoro-ethylene carbonate(FEC), propene sulfone(PRS) and the like.

In one specific example, the lithium salt-containing non-aqueous electrolyte can be prepared by adding a lithium salt such as $LiPF_6$, $LiClO_4$, $LiBF_4$, and $LiN(SO_2CF_3)_2$, to a mixed solvent of a cyclic carbonate such as EC or PC as a highly dielectric solvent and a linear carbonate such as DEC, DMC, or EMC as a low-viscosity solvent.

The lithium rechargeable battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

The lithium rechargeable battery may have various shapes such as a prismatic shape, a cylindrical shape, and a pouch shape.

The lithium rechargeable battery of another embodiment described above can be realized as a battery module including this as a unit cell, a battery pack including the battery module, and a device including the battery pack as a power source.

At this time, specific examples of the device may be an electric vehicle, a hybrid electric vehicle, a plug-in hybrid electric vehicle, and a system for power storage, but is not limited thereto.

The method for manufacturing the electrode for the lithium rechargeable battery is not particularly limited, but for example, the lithium rechargeable battery can be manufactured by a method comprising a step of applying a porous layer forming composition containing a binder resin and inorganic fine particles onto an electrode substrate and drying it to thereby form a porous layer on at least one surface of the electrode substrate, wherein the inorganic fine particles include boehmite and barium sulfate.

The details concerning the electrode substrate, binder resin, inorganic fine particles, boehmite, barium sulfate, and porous layer include all the contents described above.

In the step of applying a porous layer forming composition containing a binder resin and inorganic fine particles onto an electrode substrate and drying it to thereby form a porous layer on at least one surface of the electrode substrate, the composition for forming a porous layer is applied to at least one surface of the electrode substrate. Then, the electrode substrate coated with the composition for forming a porous layer is dried to remove the solvent contained in the composition for forming a porous layer.

In the step of applying a porous layer forming composition containing a binder resin and inorganic fine particles onto an electrode substrate and drying it to thereby form a porous layer on at least one surface of the electrode substrate, conventional coating methods known in the art can be used, and for example, various methods such as spin coating, dip coating, die coating, roll coating, comma coating, gravure coating, bar coating, curtain coating, extrusion, casting, screen printing, inkjet printing, doctor blading or a combination of these methods can be used.

Further, in the method for manufacturing the electrode for the lithium rechargeable battery, the drying method is not particularly limited, and known methods can be used. Examples thereof include drying using warm air, hot air, or low humidity air, vacuum drying, and drying using irradiation with infrared rays or electron beams, or the like.

The solvent used in the composition for forming the porous layer preferably has a solubility index similar to that of the binder resin to be used and a low boiling point in order to facilitate uniform mixing and subsequent solvent removal. The solvent is not particularly limited, but for example, one kind or a mixture of two or more kinds selected from the group consisting of acetone, tetrahydrofuran, methylene chloride, chloroform, dimethylformamide, N-methyl-2-pyrrolidone(NMP) and cyclohexane.

Further, the above-mentioned method for manufacturing the lithium rechargeable battery is not particularly limited, but may further comprise a step of assembling an electrode substrate on which a porous layer is formed and a counter electrode substrate through a process such as winding or stacking (lamination) and then injecting an electrolyte, after the step of applying a porous layer forming composition containing a binder resin and inorganic fine particles onto an electrode substrate and drying it to thereby form a porous layer on at least one surface of the electrode substrate.

## EXAMPLES

Hereinafter, actions and effects of the present disclosure will be described in more detail with reference to specific examples of the present disclosure. However, these are for illustrative purposes only, and the scope of the disclosure is not limited thereby in any way.

### Example 1

(1) Manufacture of anode

Carbon-based and silicon-based powder as an anode active material, carbon black as a conductive material, styrene-butadiene rubber (SBR), and carboxymethyl cellulose (CMC) as a binder were added to N-methyl-2 pyrrolidone (NMP) as a solvent in amount of 95.5 wt.%, 1 wt.%, 2.5 wt.%, and 1 wt.%, respectively, to prepare an anode slurry. The anode slurry was applied to a copper (Cu) thin film as an anode current collector having a thickness of 10 $\mu$m, dried, and subjected to a roll press to produce an anode substrate.

(2) Manufacture of cathode

97.5 wt.% of lithium nickel cobalt manganese aluminum-based oxide as a cathode active material, 1 wt.% of carbon black as a conductive material, and 1.5 wt.% of PVDF as a binder were added to N-methyl-2 pyrrolidone (NMP) as a solvent to prepare a cathode slurry. The cathode slurry was applied to an aluminum (Al) thin film as a cathode current collector having a thickness of 10 $\mu$m, and dried to manufacture a cathode, and then subjected to a roll press to manufacture a cathode.

(3) Preparation of composition for forming porous layer

10 g of polyvinylidene fluoride-hexafluoropropylene copolymer (PVdF-HFP) was added to 90 g of NMP, and dissolved at 80°C for about 6 hours or more to prepare a binder polymer solution. 81 g of boehmite (AlOOH, diameter: 50 nm, primary particle size: 0.07 $\mu$m, true density: 3.04 g/cm$^3$, green density: 1.35 cm$^3$, BET specific surface area: 95 m$^2$/g, D50: 350 nm) and 9 g of barium sulfate (BaSO$_4$, diameter: 30 nm, primary particle size: 0.04 $\mu$m, true density: 4.49 g/cm$^3$, green density: 2.37 g/cm$^3$, BET specific surface area: 30 m$^2$/g, D50: 150 nm) were added (weight ratio of boehmite: barium sulfate = 90:10) to 100 g of the prepared polymer solution, and NMP was further added thereto to prepare a composition for forming a porous layer in which the solid content ratio of the composition was adjusted to 40%.

(4) Manufacture of batteries

The composition for forming a porous layer was coated onto the prepared anode using a bar coating method under 30% humidity, and dried at 100°C to form a porous layer with a thickness of 19.3 $\mu$m (porosity: 56.8 %).

The anode and the cathode having the porous layer thereon was formed were assembled using a stacking method, and electrolyte (ethylene carbonate(EC): ethylmethyl carbonate(EMC) = 3/7 (volume ratio), 1 mole of lithium hexafluorophosphate (LiPF$_6$) was injected into the assembled battery to manufacture a lithium rechargeable battery.

**Example 2**

A lithium rechargeable battery was manufactured in the same manner as in Example 1, except that when preparing the composition for forming a porous layer, 72 g of boehmite and 18 g of barium sulfate were added (weight ratio of boehmite: barium sulfate = 80:20). The produced porous layer had a thickness of 14.8 $\mu$m and a porosity of 41.7%.

**Example 3**

A lithium rechargeable battery was manufactured in the same manner as in Example 1, except that when preparing the composition for forming a porous layer, 63 g of boehmite and 27 g of barium sulfate were added (weight ratio of boehmite: barium sulfate = 70:30). The produced porous layer had a thickness of 12.9 $\mu$m and a porosity of 38.0%.

**Comparative Example 1**

A lithium rechargeable battery was manufactured in the same manner as in Example 1, except that when preparing the composition for forming a porous layer, 90 g of boehmite was added (weight ratio of boehmite: barium sulfate = 100:0). The produced porous layer had a thickness of 17.7 $\mu$m and a porosity of 58.2%.

**Comparative Example 2**

A lithium rechargeable battery was manufactured in the same manner as in Example 1, except that when preparing the composition for forming a porous layer, 90 g of barium sulfate (BaSO$_4$, primary particle (single particle) diameter: about 40 nm) as inorganic fine particles was added. The produced porous layer had a thickness of 17.3 $\mu$m and a porosity of 46.2%.

**Comparative Example 3**

7 g of barium titanate (BaTiO$_3$, primary particle (single particle) diameter: about 100 nm) was sprayed onto the anode manufactured in Example 1.

The anode sprayed with barium titanate, the polyolefin separator, and the cathode manufactured in Example 1 were assembled using a stacking method, and an electrolyte solution (ethylene carbonate(EC)/ethylmethyl carbonate(EMC) = 3/7 (volume ratio), 1 mole of lithium hexafluorophosphate (LiPF$_6$)) was injected into the assembled battery to manufacture a lithium rechargeable battery.

The manufactured lithium rechargeable battery was charged and discharged for one cycle to form a coating layer containing barium titanate onto the surface of the anode.

It was confirmed that detachment of the anode active material occurred in the manufactured lithium rechargeable battery.

**Comparative Example 4**

The anode manufactured in Example 1 was immersed in an aqueous barium sulfate solution (concentration: 60%) to form a coating layer (thickness: 15$\mu$m) containing barium sulfate onto the anode.

The anode having the coating layer formed thereon, the polyolefin separator, and the cathode manufactured in Example 1 were assembled using a stacking method, and an electrolyte solution (ethylene carbonate(EC)/ethylmethyl carbonate(EMC) = 3/7 (volume ratio), 1 mole of lithium hexafluorophosphate (LiPF$_6$)) was injected into the assembled battery to manufacture a lithium rechargeable battery.

In the manufactured lithium rechargeable battery, detachment of the anode active material was occurred by contact between the anode electrode and the barium sulfate aqueous solution.

**Experimental Example 1: Reactivity Analysis**

Inorganic fine particles that can be used in electrodes for lithium rechargeable batteries were analyzed for their reactivity with electrolyte solutions.

Specifically, the particles shown in Table 1 below and the electrolyte (ethylene carbonate(EC)/ethylmethyl carbonate(EMC) = 3/7 (volume ratio), 1 mole of lithium hexafluorophosphate (LiPF$_6$)) were placed in a weight ratio of 1:1 in an aluminum (Al) pouch, and they were mixed, vacuum sealed, and the sealed pouch battery was stored at 85°C for 72 hours.

The generated gas was then collected, and the amount of gas generated was quantitatively analyzed using gas chromatography, and is shown in Table 1 below.

After collecting the gas, the pouch was opened, and the amount of color change ($\Delta$E) of the dried particles before and after electrolyte impregnation was measured, and the result is shown in Table 1 below.

Also, XPS analysis was performed for barium titanate (BaTiO$_3$, diameter: 100 nm), barium sulfate (diameter: 70 nm), alumina particles (diameter: 350 nm), boehmite particles (diameter: 60 nm) and magnesium hydroxide particles (diameter: 200 nm) before and after electrolyte impregnation.

The amount of color change ($\triangle$E) before and after electrolyte impregnation was measured using a color meter, and calculated according to Equation 2 below.

[Equation 2]

Amount of color change before and after electrolyte impregnation

$$(\triangle E) = \{(\triangle L^*)^2 + (\triangle a^*)^2 + (\triangle b^*)^2\}0.5$$

[Table 1]

| Type of particles | Amount of gas generated (ml/g) | Amount of color change ($\triangle$E) |
|---|---|---|
| Barium titanate | 0.70 | 5.83 |
| Barium sulfate | 0.38 | 6.12 |
| Alumina | 8.99 | 16.50 |
| Boehmite | 10.75 | 23.08 |
| Magnesium hydroxide | 10.13 | 14.33 |

As shown in Table 1, it was shown that in the case of barium sulfate, the amount of gas generated after electrolyte impregnation is only 0.38ml/g, and the amount of color change before and after electrolyte impregnation is only 6.12. It was confirmed that barium sulfate generates a small amount of gas, which is a side reaction product with the electrolyte, and shows small color changes due to side reactions with the electrolyte solution.

In addition, as a result of XPS analysis, it was confirmed that lithium salt peaks were 685 eV or more and 690 eV or less, showing that it has low reactivity with the electrolyte solution and can be expected to have excellent battery life.

On the other hand, in the case of alumina, boehmite, and magnesium hydroxide used in Comparative Examples 1 to 3, the amount of gas generated after electrolyte impregnation is 8.99 ml/g or more and 10.75 ml/g or less, showing that the amount of gas generated is large, and the amount of color change before and after electrolyte impregnation is 14.33 or more and 23.08 or less, showing that the amount of color change is also large.

In addition, in the case of Comparative Examples 1 to 3, as a result of XPS analysis, it was confirmed that no peak was measured at 685 eV or more and 690 eV or less, and side reactions actively progressed due to the high reactivity between the electrolyte solution and the particles.

**Experimental Example 2: Porous Layer Analysis**

The thickness and porosity of the porous layer or coating layer of the lithium rechargeable battery manufactured in each of the Examples and Comparative Examples were analyzed, and shown in Table 2 below.

The porosity of each porous layer or coating layer was calculated as follows. By measuring the thickness of the porous layer or coating layer, the volume of the porous layer or coating layer for a certain area was calculated, and the weight of only the porous layer or coating layer excluding the weight of the electrode substrate and current collector among the sample weight was calculated, and the actual density of the porous layer or coating layer was calculated by dividing the volume by the weight. The theoretical density was calculated when the solid composition of the porous layer or coating layer was 100% dense, and the porosity was calculated using Equation 1 below.

[Equation 1]

$$\text{Porosity (\%)}= \{1 - (\text{Actual density})/(\text{Theoretical density})\} \times 100.$$

**Experimental Example 2: Dielectric Breakdown Voltage**

With respect to the anode having a porous layer formed thereon manufactured in each of Examples and Comparative Examples, the maximum voltage allowed before dielectric breakdown occurred under a boosting speed of 100 V/sec was measured using a Hi-pot meter, the measured maximum voltage was divided by the thickness of the coating film, the maximum voltage allowed per unit thickness was calculated, and shown in Table 2 below.

**Experimental Example 4: Long-term Life Characteristics**

With respect to the anode having a porous layer formed thereon manufactured in each of Examples, Comparative Examples, the resistance was measured by the Nyquist plot method using electrochemical impedance spectroscopy (EIS) under AC voltage amplitude of 10 mV and frequency of $10^4 \sim 10^5$ Hz.

The ionic conductivity was calculated by substituting the measured resistance, thickness and area of the coating film, and shown in Table 2 below.

**Experimental Example 5: Long-term Life Characteristics**

The lithium rechargeable batteries of Examples, and Comparative Examples were cycled between 3.0 and 4.2 V at 0.1 C-rate at room temperature. Further, the discharge capacity retention was measured through the capacity retention rate of the material during 300 cycles, and the results are shown in Table 2 below.

[Table 2]

|  | Porous layer | | Ion conductivity (mS/cm) | Dielectric breakdown voltage (kV/mil) | 300cycle Retention |
|  | Thickness ($\mu$m) | Porosity (%) |  |  | Discharge capacity retention (%) |
|---|---|---|---|---|---|
| Example 1 | 19.3 | 56.8 | 2.03 | 0.74 | 88.1 |
| Example 2 | 14.8 | 41.7 | 1.94 | 0.95 | 89.8 |
| Example 3 | 12.9 | 38.0 | 1.93 | 1.15 | 85.1 |
| Comparative Example 1 | 17.7 | 58.2 | 2.15 | 0.62 | 83.9 |
| Comparative Example 2 | 17.3 | 46.2 | 2.064 | 0.87 | 84.3 |

As shown in Table 2, it was shown that the porous layers formed in the lithium rechargeable batteries of Examples have a thickness of 12.9 $\mu$m to 19.3 $\mu$m, and a porosity of 38% or more and 56.8% or less.

Further, it was confirmed that the lithium rechargeable batteries of Examples have an ionic conductivity of 1.93 mS/cm or more and 2.03 mS/cm or less, a dielectric breakdown voltage of 0.74 kV/mil or more and 1.15 kV/mil or less, and a discharge capacity retention rate of 85.1% or more and 89.8% or less after 300 cycles, thereby realizing excellent insulation and ionic conductivity, having excellent battery characteristics and excellent long-term life characteristics.

On the other hand, it was confirmed that the lithium rechargeable batteries of Comparative Examples have an ionic conductivity of 2.064 mS/cm or more, a dielectric breakdown voltage of 0.87 kV/mil or less, and a discharge capacity maintenance rate of only 84.3% or less after 300 cycles, which appear that battery characteristics and long-term life characteristics become poor compared to Examples.

**Claims**

1. An electrode for a lithium rechargeable battery comprising:

   an electrode substrate; and
   a porous layer formed on the electrode substrate, the porous layer comprising a binder resin and inorganic fine particles,
   wherein the inorganic fine particles include boehmite and barium sulfate.

2. The electrode for the lithium rechargeable battery of claim 1, wherein:
   the inorganic fine particles include boehmite and barium sulfate in a weight ratio ranging from 9:1 to 6:4.

3. The electrode for the lithium rechargeable battery of claim 1, wherein:

   the barium sulfate has a green density ranging from 2 $g/cm^3$ to 3 $g/cm^3$, and
   a BET specific surface area ranging from 5 $m^2/g$ to 50 $m^2/g$.

4. The electrode for the lithium rechargeable battery of claim 1, wherein:

   the boehmite has a green density ranging from 1 $g/cm^3$ to 1.8 $g/cm^3$, and
   a BET specific surface area ranging from 5 $m^2/g$ to 120 $m^2/g$.

5. The electrode for the lithium rechargeable battery of claim 1, wherein:
   the boehmite and the barium sulfate each include primary particles having a diameter ranging from 5 nm to 90 nm.

6. The electrode for the lithium rechargeable battery of claim 1, wherein:
   the porous layer has a porosity ranging from 30% to 90%.

7. The electrode for the lithium rechargeable battery of 1, wherein:
   the porous layer has a thickness ranging from 0.1 $\mu$m to 100 $\mu$m.

8. The electrode for the lithium rechargeable battery of claim 1, wherein:
   the porous layer includes 110 parts by weight to 5000 parts by weight of the inorganic fine particles based on 100 parts by weight of the binder resin.

9. The electrode for the lithium rechargeable battery of claim 1, wherein:
   the porous layer includes 50 parts by weight to 500 parts by weight of barium sulfate based on 100 parts by weight of the binder resin.

10. The electrode for the lithium rechargeable battery of claim 1, wherein:
    the porous layer includes 110 parts by weight to 1000 parts by weight of boehmite based on 100 parts by weight of the binder resin.

11. The electrode for the lithium rechargeable battery of claim 1, wherein:
    the binder resin comprises one or more of polyvinylidene fluoride, polyvinylidene fluoride-hexafluoropropylene, polyvinylidene fluoride-tetrafluoroethylene, polyvinylidene fluoride-trichlorethylene, polyvinylidene fluoride-chlorotrifluoroethylene, polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene-butadiene copolymer, polyurethane, polyacrylic acid, polyimide, or styrene butadiene rubber.

12. The electrode for the lithium rechargeable battery of claim 1, wherein:
    the porous layer is coupled to the electrode substrate via an adhesive layer or an adhesive pattern formed on at least one surface of the porous layer.

13. A lithium rechargeable battery comprising:

the electrode for the lithium rechargeable battery of claim 1;
a counter electrode to the electrode of the lithium rechargeable battery; and
an electrolyte interposed between the electrode for the lithium rechargeable battery and the counter electrode.

14. The lithium rechargeable battery of claim 13, wherein:
the lithium rechargeable battery does not include a porous polymer separator.

<table>
<tr><td colspan="2">**INTERNATIONAL SEARCH REPORT**</td><td colspan="2">International application No.<br>**PCT/KR2023/013859**</td></tr>
</table>

| A. | CLASSIFICATION OF SUBJECT MATTER |
|---|---|

**H01M 10/058**(2010.01)i; **H01M 50/483**(2021.01)i; **H01M 50/446**(2021.01)i; **H01M 50/491**(2021.01)i; **H01M 10/42**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 10/058(2010.01); H01M 10/04(2006.01); H01M 10/052(2010.01); H01M 10/0525(2010.01); H01M 10/42(2006.01); H01M 4/36(2006.01); H01M 4/48(2010.01); H01M 50/40(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium rechargeable battery), 전극(electrode), 다공성층(porous layer), 무기 미세 입자(inorganic fine particle)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br><br>Y | US 2022-0181606 A1 (PANASONIC INTELLECTUAL PROPERTY MANAGEMENT CO., LTD.) 09 June 2022 (2022-06-09)<br>See paragraphs [0010], [0012] and [0039]-[0046]. | 1-11,13<br><br>12,14 |
| Y | KR 10-2015-0137541 A (SK INNOVATION CO., LTD.) 09 December 2015 (2015-12-09)<br>See paragraphs [0029]-[0039]. | 12,14 |
| A | CN 113632273 A (DONGGUAN AMPEREX TECHNOLOGY LIMITED) 09 November 2021 (2021-11-09)<br>See claims 1-15. | 1-14 |
| A | KR 10-2021-0015103 A (UNIST(ULSAN NATIONAL INSTITUTE OF SCIENCE AND TECHNOLOGY)) 10 February 2021 (2021-02-10)<br>See paragraphs [0031]-[0061]. | 1-14 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 December 2023** | **18 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013859** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0136699 A (SAMSUNG SDI CO., LTD.) 08 December 2020 (2020-12-08) <br> See claims 1-10. | 1-14 |

Form PCT/ISA/210 (second sheet) (July 2022)

**INTERNATIONAL SEARCH REPORT**
Information on patent family members

International application No.

**PCT/KR2023/013859**

| Patent document cited in search report | | | Publication date (day/month/year) | Patent family member(s) | | | Publication date (day/month/year) |
|---|---|---|---|---|---|---|---|
| US | 2022-0181606 | A1 | 09 June 2022 | CN | 113614943 | A | 05 November 2021 |
| | | | | EP | 3951917 | A1 | 09 February 2022 |
| | | | | WO | 2020-195091 | A1 | 01 October 2020 |
| KR | 10-2015-0137541 | A | 09 December 2015 | CN | 105304848 | A | 03 February 2016 |
| | | | | EP | 2950370 | A1 | 02 December 2015 |
| | | | | US | 2015-0349308 | A1 | 03 December 2015 |
| CN | 113632273 | A | 09 November 2021 | CN | 113632273 | B | 27 December 2022 |
| | | | | WO | 2022-110050 | A1 | 02 June 2022 |
| KR | 10-2021-0015103 | A | 10 February 2021 | KR | 10-2323286 | B1 | 08 November 2021 |
| KR | 10-2020-0136699 | A | 08 December 2020 | KR | 10-2368306 | B1 | 28 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2023013859 W
- KR 1020220116598
- KR 1020230111987